Europäisches Patentamt

European Patent Office

Office européen des brevets

(11) Veröffentlichungsnummer: **0 082 883**
**A1**

## (12) EUROPÄISCHE PATENTANMELDUNG

(21) Anmeldenummer: **81110767.1**

(22) Anmeldetag: **24.12.81**

(51) Int. Cl.³: **E 03 F 5/10**

(43) Veröffentlichungstag der Anmeldung:
**06.07.83 Patentblatt 83/27**

(84) Benannte Vertragsstaaten:
**AT BE CH DE FR GB IT LI NL SE**

(71) Anmelder: **Paarmann, Werner**
**Alte Landwehr 14**
**D-4803 Steinhagen(DE)**

(72) Erfinder: **Paarmann, Werner**
**Alte Landwehr 14**
**D-4803 Steinhagen(DE)**

(54) **Anordnung und Ausbildung eines Wasserspeichers als Pumpensaugraum, Regen- oder Schmutzwasserspeicher, mit tiefer, als der Speicher, liegender Saug- oder Ablaufleitung.**

(57) Pumpensaugräume werden nicht vollständig entleert, die Oberflächen von Saugräumen und Speichern für verunreinigtes Wasser werden, da Ablagerungen auftreten, möglichst klein gehalten, damit ergibt sich eine große Höhendifferenz h zwischen Ein- und Ausschaltwasserspiegel von Pumpen oder dem Zu- und Ablauf von Speichern.

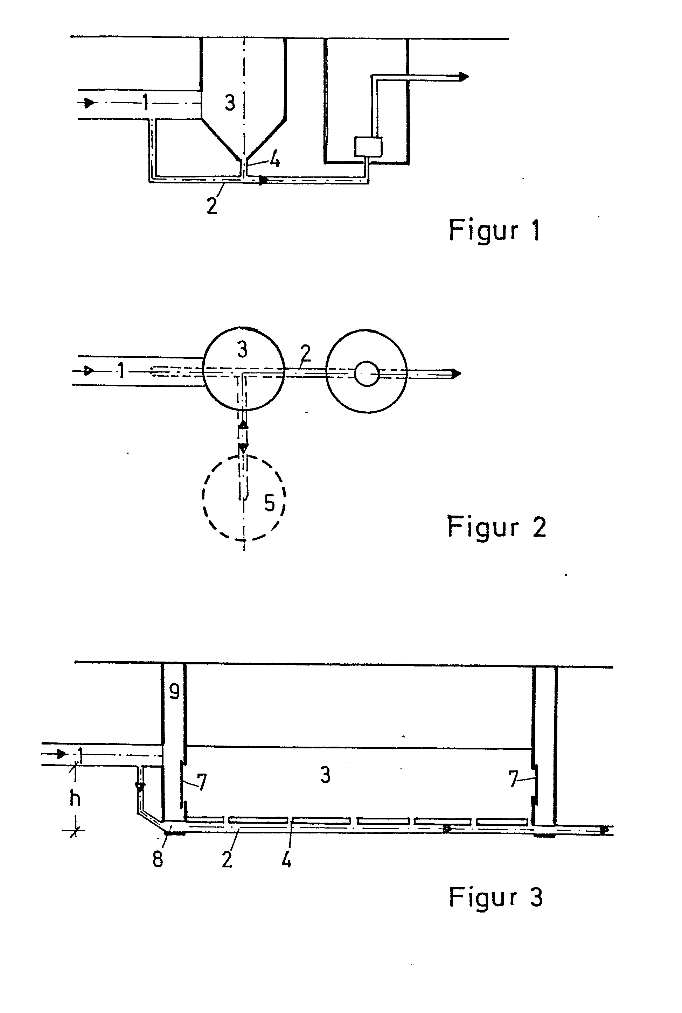

Durch die Anordnung des Saugraumes oder Speichers (3) über der Saug- oder Abflußleitung (2) und die Verbindung von Zulaufleitung (1) und Saug- oder Abflußleitung (2) wird erreicht, daß nicht das gesamte Wasser den Speicher durchfließt, durch die Leitung (4) wird der Speicher vollkommen entleert, außerdem kann, wie in Figur 3 dargestellt, eine geringe Höhendifferenz h eingehalten werden, trotzdem wird ein hoher Grad an Selbstreinigung erreicht, da Speicher und Ablauf durch die Leitung (4) verbunden sind.

Eine leichte Reinigungs- und Erweiterungsmöglichkeit des Speichers ist gegeben.

Figur 3

0082883

Anordnung und Ausbildung eines Wasserspeichers als Pumpensaugraum, Regen-oder Schmutzwasserspeicher, mit tiefer, als der Speicher, liegender Saug- oder Ablaufleitung.

Die Erfindung bezieht sich auf die Anordnung und Ausbildung eines Wasserspeichers als Pumpensaugraum, Regen-oder Schmutzwasserspeicher, mit tiefer, als der Speicher, liegender Saug-oder Ablaufleitung, wobei sowohl der Pumpensaugraum, als auch der Wasserspeicher für Regen-oder Schmutzwasser unterschiedlich ausgebildet werden können.

Die Pumpensaugräume werden erforderlich, um die Differenz zwischen Zufluß und der Förderleistung der Pumpe auszugleichen, damit zu kurze schädliche Schaltspiele vermieden werden. Die Regen- und Schmutzwasserspeicher werden erforderlich, um im Zufluß einer Wasserreinigungsanlage eine gleichmäßige Beaufschlagung zu erhalten, oder z.B. nach starken Niederschlägen eine Überlastung der weiter unten gelegenen Kanäle zu vermeiden.

Die Saugräume werden allgemein so ausgebildet, daß sich die Pumpen im Saugraum befinden - Naßaufstellung - oder vom Pumpenstandort getrennt, in einem gesonderten Raum untergebracht sind - Trockenaufstellung. Der Trockenaufstellung ist, insbesondere in Bezug auf Wartung und Unterhaltung, der Vorzug zu geben. Die Saugräume werden, sowohl bei der Naßals auch bei der Trockenaufstellung, nicht vollständig entleert, bei langen Standzeiten wird eine Anfaulung bei Abwasserförderung eintreten. Die Saugräume sind so ausgebildet, daß der gesamte Zufluß den Saugraum durchfließt.
Bei der Speicherung von Abwasser oder Regenwasser ist auch die Gefahr, daß Ablagerungen entstehen, die nur mit maschinellem Aufwand sinnvoll beseitigt werden können, oder es sind spezielle Sohlausbildungen erforderlich, die nur, wiederum mit großem Aufwand - Handarbeit -, erstellt werden können und dann bei Ablagerungen, die noch auftreten, schwer zu reinigen sind, z.B. das Mannes - Becken. Durch die Art der Ausbildung des Saugraumes ist die mögliche Oberfläche beschränkt, die Schaffung eines erforderlichen Saug-oder Speichervolumens ist nur durch eine entsprechende Differenzhöhe zwischen Ein-und Ausschaltwasserspiegel möglich, gleiches gilt bei der Bemessung von Speicherbecken. Vor allem bei Saugräumen sind, bedingt durch die Differenzen, Energieverluste und schwankende Fördermengen gegeben.

Der Stand der Technik ist zu entnehmen : Arbeitsblatt A 134 - Entwurf - April 1980, der Abwassertechnischen Vereinigung e.V. (ATV) 'Planung und Bau von Abwasserpumpwerken mit kleinen Zuflüssen'. Lehr-und Handbuch der Abwassertechnik - Band I - Herausgeber - ATV - Verlag von Wilhelm Ernst & Sohn, Berlin - München,1967, S. 550 ff. Seite 30 in Karl und Klaus Imhoff - Taschenbuch der Stadtentwässerung, 25. Aufl., Verlag Oldenbourg - München. ATV - Regelwerk, Arbeitsblatt A 117 -'Richtlinien für die Bemessung, die Gestaltung und den Betrieb von Regenrückhaltebecken', St.Augustin 1977.

Die Erfindung, wie sie in den Ansprüchen gekennzeichnet ist, löst die Aufgabe, den Saugraum vollständig zu entleeren, eine erhöhte maximale Ausnutzung des Baukörpers zu erreichen, eine leichte Erweiterungsmöglichkeit des Saugraumes zu schaffen und eine wirtschaftliche und leicht zu unterhaltende Lösung eines Wasserspeichers aufzuzeigen. Es wird an Förderhöhe eingespart und die Höhendifferenz zwischen Ein-und Ausschaltwasserspiegel und zwischen Zu-und Ablauf kann gering gehalten werden, damit wird gleichzeitig eine größere Konstanz in der Fördermenge oder Abflußmenge erreicht.

Im folgenden wird die Erfindung anhand von zwei Ausführungswegen darstellenden Zeichnungen näher erläutert, es zeigen :

Figur 1 einen Längsschnitt durch eine Ausführungsform,
Figur 2 die Draufsicht auf die Ausführungsform gemäß der Figur 1.

Die ankommende Leitung 1 endet im Pumpensaugraum und ist mittels eines Untersturzes oder Absturzes an die Saugleitung 2 der Pumpe angeschlossen. Der Pumpensaugraum 3 ist durch die Leitung 4 mit der Saugleitung verbunden. Der Speicher kann vollständig, bis in den Bereich der Leitung 4, entleert werden. Während der Pumpenförderung fließt der gesamte Wasserstrom direkt zur Pumpe, ohne in den Speicher zu gelangen, alle schwereren Teile werden auch bei Pumpenstillstand nicht so leicht in den Saugraum aufsteigen.
In der Figur 2 ist die Erweiterungsmöglichkeit 5 dargestellt.

Figur 3 zeigt einen Längenschnitt durch eine Ausführungsform mit einem vorgefertigten Profil, z.B. einer Rohrleitung.

Die ankommende Leitung 1 ist mit der Leitung 2, die als Saug- oder Abflußleitung angesehen werden kann, in bekannter Weise verbunden, der Speicher oder Saugraum 3 ist durch den Schacht 9 besteigbar, in dem die Leitung 1 endet. Die Höhe h, Differenz zwischen Ein-und Ausschaltwasserspiegel oder Zu-
und Ablaufhöhe, ist gering. Durch die Längenwahl
des Profiles 3 ist eine genaue Anpassung an das erforderliche Speichervolumen möglich, auch hier kann
eine Erweiterung durch Nebenstränge jederzeit leicht
durchgeführt werden.
Das Profil 3 kann an beliebig vielen Stellen mit der
Saug-oder Abflußleitung 2 durch die Leitungen 4 verbunden sein, so daß sich,ohne Einbauten im Profil,
großflächige Ablagerungen nicht ausbilden können.
Der Abschnitt 8 im Schacht kann als Sohlgerinne ausgebildet werden. Durch die Reinigungsöffnungen 7 ist
eine Kontrolle des Speichers und je nach Erfordernis
auch eine maschinelle Reinigungsmöglichkeit gegeben,
da er symetrisch ausgebildet ist.

Patentansprüche

1. Anordnung und Ausbildung eines Wasserspeichers als Pumpensaugraum, Regen-oder Schmutzwasserspeicher, mit tiefer, als der Speicher, liegender Saug-oder Ablaufleitung, bestehend aus einem Saugraum oder Speicher (3) und der Saug-oder Ablaufleitung (2) aus Rohrleitungen, vorgefertigten Profilen, Bauwerksteilen oder Bauwerken, dadurch gekennzeichnet, daß der Saugraum oder S Speicher höher als die Saug-oder Ablaufleitung liegt und vollkommen entleert werden kann und die Saug-oder Ablaufleitung an die Zuleitung (1) angeschlossen ist.

2. Saugraum oder Speicher nach Patentanspruch 1, dadurch gekennzeichnet, daß er durch vorgefertigte Profile, in Verbindung mit der Saug-oder Ablaufleitung, gebildet werden kann.

3. Saugraum oder Speicher nach den Patentansprüchen 1 - 2, dadurch gekennzeichnet, daß er durch Profilverlängerung oder ein zusätzliches Bauwerk (5) erweitert werden kann.

4. Saugraum oder Speicher nach den Patentansprüchen 1 - 3, dadurch gekennzeichnet, daß die Saugleitung mit dem Saugraum und der Speicher mit der Ablaufleitung durch eine oder mehrere Leitungen (4) verbunden sind.

5. Saugraum oder Speicher nach den Patentansprüchen 1 - 3, dadurch gekennzeichnet, daß Saugraum oder Speicher maschinell gereinigt werden kann.

Figur 1

Figur 2

Figur 3

# 0082883

Nummer der Anmeldung

## EUROPÄISCHER RECHERCHENBERICHT

EP 81 11 0767

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 274 044 (LAUTRICH) <br><br> *Spalten 1-6; Figuren 6-9* <br><br> --- | 1,2,3,4 | E 03 F 5/10 |
| A | DE-A-2 449 347 (NUSSBAUM) <br><br> --- | | |
| A | DE-A-2 527 978 (MENZEL) <br><br> ----- | | |

| | RECHERCHIERTE SACHGEBIETE (Int. Cl. ³) |
|---|---|
| | E 03 F |

Der vorliegende Recherchenbericht wurde für alle Patentansprüche erstellt.

| Recherchenort | Abschlußdatum der Recherche | Prüfer |
|---|---|---|
| DEN HAAG | 31-08-1982 | HANNAART J.P. |